## Europäisches Patentamt

## European Patent Office

## Office européen des brevets

(19)

(11) Numéro de publication: **0 213 987**
**B1**

(12) **FASCICULE DE BREVET EUROPÉEN**

(45) Date de publication du fascicule du brevet:
**04.10.89**

(51) Int. Cl.⁴: **B 01 J 21/08**

(21) Numéro de dépôt: **86401550.8**

(22) Date de dépôt: **11.07.86**

(54) Procédé de préparation de particules de silice sphéroidales.

(30) Priorité: **15.07.85 FR 8510797**

(43) Date de publication de la demande:
**11.03.87 Bulletin 87/11**

(45) Mention de la délivrance du brevet:
**04.10.89 Bulletin 89/40**

(84) Etats contractants désignés:
**BE DE FR GB IT NL**

(56) Documents cité:
**FR-A-918 722**
**FR-A-2 018 783**
**FR-A-2 313 973**
**US-A-3 030 314**

(73) Titulaire: **RHONE- POULENC CHIMIE, 25, quai Paul Doumer, F-92408 Courbevoie Cédex (FR)**

(72) Inventeur: **Jacques, Roland, 579, Montée de Silhol, F-30100 Ales (FR)**

(74) Mandataire: **Esson, Jean- Pierre, Rhône- Poulenc Interservices Service Brevets Chimie 25, quai Paul Doumer, F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

La présente invention concerne un procédé de préparation de particules de silice sphéroïdales et les particules obtenues. Elle a trait plus également à des particules sphéroïdales de silice présentant de la macroporosité et utilisables comme catalyseurs ou supports de catalyseurs.

Les catalyseurs ou supports de catalyseurs à base de silice doivent généralement présenter une porosité qui facilite une diffusion rapide des gaz de la surface vers les centres actifs à l'intérieur et réciproquement. C'est la raison pour laquelle une macroporosité est généralement exigée. Par ailleurs, ces catalyseurs ou ces supports doivent posséder une résistance mécanique qui doit, en particulier, être conservée après imprégnation par les éléments catalytiques et durant leur utilisation dans les conditions du procédé dans lequel elles sont mises en oeuvre.

On connaît divers procédés de fabrication de particules de silice sphéroïdales. C'est ainsi qu'il est connu, d'après le brevet allemand n° 1 266 741 de mettre en forme par la technique sol-gel un hydrogel de silice mélangé avec une solution d'un silicate alcalin en présence d'un acide. On forme des gouttes du mélange que l'on fait tomber dans un liquide non miscible, les billes recueillies sont séchées puis calcinées. Le principal inconvénient de ce procédé est qu'il est d'une mise en oeuvre compliquée et délicate et qu'il conduit à des produits dont le coût de fabrication est élevé; de plus, les billes obtenues éclatent lors de leur trempage dans l'eau ou de leur imprégnation avec des solutions contenant des éléments catalytiques.

On a, par ailleurs, déjà proposé des procédés moins onéreux pour fabriquer des billes de silice par formage au moyen d'appareils de granulation. C'est ainsi que le brevet allemand n° 1 187 588 décrit un procédé dans lequel on mélange un sol de silice aqueux contenant de l'oxyde de magnésium comme liant avec des charges siliceuses et silicatées. L'inconvénient d'un tel procédé est qu'il nécessite de mettre en oeuvre un liant et que les porosités obtenues ne sont pas satisfaisantes.

Ainsi, jusqu'à présent, il n'était pas possible d'obtenir de façon économique des billes de silice présentant une macroporosité suffisante et une résistance mécanique, notamment lors de l'imprégnation des éléments catalytiques, satisfaisante. De plus, les procédés proposés nécessitaient l'utilisation d'un liant non silicié.

La présente invention vise donc à proposer un procédé peu onéreux de fabrication de particules de silice sphéroïdales par formage au moyen d'appareils de granulation qui présentent une macroporosité suffisante et qui ne présentent aucune fragilisation par trempage dans l'eau ou dans une solution contenant des éléments actifs catalytiquement. Ledit procédé ne nécessitant pas de façon surprenante la mise en oeuvre d'un liant ou d'un agent gélifiant non silicié.

La présente invention concerne en effet un procédé de fabrication de particules de silice sphéroïdales par mise en forme au moyen d'un appareil de granulation d'un hydrosol de silice et xérogel ou un aérogel de silice caractérisé en ce qu'on agglomère au moyen de l'appareil de granulation un hydrosol de silice dont la teneur en silice est comprise entre 15 et 35 % en poids avec un xérogel ou un aérogel de silice dont les particules présentent un diamètre moyen compris entre 5 et 25 $\mu$m, le rapport entre la quantité de silice de l'hydrosol exprimée en $SiO_2$ et la quantité de silice du xérogel ou de l'aérogel exprimée en $SiO_2$ étant comprise entre 15 et 35 %, la particule sphéroïdale de silice obtenue est ensuite séchée.

Selon le procédé de l'invention, on agglomère l'hydrosol et le xérogel ou l'aérogel au moyen d'un appareil de granulation. Cet appareil peut être un granulateur tournant ou un drageoir ou tout autre dispositif permettant de faire des sphères par granulation d'une poudre et d'un liant.

L'hydrosol de silice mis en oeuvre présente une teneur en silice comprise entre 15 et 35 % en poids et de préférence comprise entre 18 et 30 % et. La surface spécifique de l'hydrosol mesurée après séchage à 200°C par la méthode B. E. T. est de préférence comprise entre 150 et 500 m²/g et plus particulièrement entre 300 et 450 m²/g. L'hydrosol de silice mis en oeuvre peut être obtenu de différentes manières. Il peut notamment avoir été préparé par hydrolyse d'esters siliciques, par neutralisation partielle ou totale d'une solution de silicate avec des acides ou par traitement avec échange d'ions d'une solution de silicate et concentration.

La dimension des particules de silice constituant l'hydrosol est de préférence choisie de façon à ce que celle-ci soit inférieure à environ 10 nm.

Le xérogel mis en oeuvre dans le procédé de l'invention est conforme à la définition donnée dans le livre de Ralph K. ILER "The Chemistry of Silica" a Wiley interscience publication Ed. 1978 pages 463 533. Ce xérogel est préparé comme indiqué dans le livre de ILER et le préférence par réaction entre le silicate de sodium et l'acide sulfurique.

L'aérogel mis en oeuvre dans le procédé de l'invention est conforme à la définition donnée dans le livre de K. ILER cité ci-dessus, pages 537 et suivantes.

Selon l'invention, le xérogel ou l'aérogel de silice mise en oeuvre est constitué de particules présentant un diamètre moyen compris entre 5 et 25 $\mu$m et de préférence entre 10 et 20 $\mu$m.

Cette valeur du diamètre moyen est un facteur critique selon l'invention. En effet, d'une part en-dessous de 5 $\mu$m il s'est avéré que les particules sphéroïdales obtenues n'ayant pas une macroporosité suffisante sont peu intéressantes pour la catalyse, d'autre part, au-dessus de 25 $\mu$m, les particules sphéroïdales ne présentent pas une solidité suffisante. Un bon compromis macroporosité-solidité est atteint en mettant en oeuvre des particules de xérogel dont le diamètre moyen est de préférence compris entre 15 et 20 $\mu$m.

Selon le procédé de l'invention, le rapport entre la quantité de silice de l'hydrosol exprimée en $SiO_2$ et la quantité de silice du xérogel ou de l'aérogel exprimée en $SiO_2$ mise en oeuvre est compris entre 15 et 35 %.

L'agglomération du xérogel ou de l'aérogel et de l'hydrosol est effectuée au moyen d'un appareil de

EP 0 213 987 B1

granulaton comme un bol tournant, un drageoir tournant un granulateur tournant... ; le temps de séjour du mélange dans l'appareil de granulation est de préférence compris entre 1 et 15 minutes.

Après l'agglomération, les particules sphéroïdales de silice obtenues sont séchées. Le séchage est opéré de préférence d'une température comprise entre 200 et 800° C et plus particulièrement entre 400 et 500° C.

Les particules sphéroïdales de silice obtenues selon le procédé de l'invention présentent une macroporosité convenant particulièrement pour leur application comme catalyseur ou support de catalyseur. Cette macroporosité permet en outre un dépôt d'éléments catalytiques dans des teneurs élevées, ce qui permet d'assurer une activité catalytique particulièrement intéressante. Cette macroporosité est généralement supérieure à 0,5 cm$^3$/g et de préférence à 0,7 cm$^3$/g. On entend par macroporosité selon l'invention les pores dont le diamètre est supérieur à 100 nm.

La distribution et la dimension des pores est particulièrement caractéristique des particules obtenues selon le procédé. C'est ainsi que celles-ci sont telles que la répartition des volumes poreux suivant la taille des pores est la suivante:

| Ø en nm | < 10 | 10 - 100 | 100 - 1000 | > 1000 |
|---|---|---|---|---|
| $\gamma$ cm$^3$/g | 0 - 0,60 | 0,05 - 0,50 | 0,05 - 0,20 | 0,05 - 0,20 |

Ø représentant le diamètre des pores et $\gamma$ le volume des pores ayant un diamètre compris dans les limites indiquées.

Le procédé selon l'invention permet d'obtenir, en outre, des billes d'un diamètre extérieur compris entre 1 et 10 mm et notamment supérieur à 5 mm, billes qu'il s'avérait, jusqu'à présent, très difficile d'obtenir par les procédés connus sans fragilisation lors du trempage dans l'eau.

Les particules de silice sphéroïdales de l'invention sont utilisables comme catalyseur ou support de catalyseur.

Les exemples ci-après illustrent l'invention sans en limiter la portée.

## Exemple 1

100 kg de silice obtenue par la voie gel aux caractéristiques suivantes: Surface BET 450 m$^2$/g, VPT 72 cm$^3$/100 g, Ø moyen des particules 12 µm sont agglomérés dans un bol tournant en PVC sous forme de billes de 5 à 6mm par arrosage avec une dispersion de particules de silice colloïdales à 20 % de SiO$_2$ et de surface BET de 400 m$^2$/g.

Pour agglomérer les 100 kg de silice, nous avons utilisé 106 Kg de sol de silice à 20 %, soit un rapport quantité de silice de l'hydrosol à celle du xérogel de 21,2 %.

Le caractéristiques des billes obtenues sont données dans le tableau 1 ci-après.

## Exemple 2

100 kg de silice synthétique provenant de la voie gel sont broyés dans un broyeur à boulets jusqu'à obtention des particules ayant un diamètre moyen de 12 à 15 µm et la répartition granulométrique est telle que:

| < 2 µm | < 4 µm | < 6 µm | < 8 µm | < 12 µm | < 16 µm | < 25 µm | < 32 µm |
|---|---|---|---|---|---|---|---|
| 2 % | 5 % | 16 % | 27 % | 48 % | 60 % | 80 % | 85 % |

Dans un bol rotatif en PVC la silice en poudre est granulée en billes de 4 à 6 mm. Par arrosage avec une dispersion de particules de silice colloïdale à 30 % de SiO$_2$ et de surface BET de 500 m$^2$/g.

Pour granuler 20 kg de silice on a utilisé 21Kg d'hydrosol, ce qui correspond à un rapport silice hydrosol/silice xérogel de 31,5 %.

Les caractéristiques des billes obtenues sont données dans le tableau 1 ci-après.

## Exemple 3 - Comparatif

On a également rassemblé dans le tableau 1 deux colonnes comparatif 1 et comparatif 2. Les billes de silice fabriquées par la technique oil-drop et vendues respectivement par les sociétés Kali-Chemie et Shell sous les dénominations respectives de: "KC Silica perle AF 125"® et de "Silica sphères S970A1"®.

**Tableau 1**

| BILLES | EXEMPLE 1 | EXEMPLE 2 | COMPARATIF 1 | COMPARATIF 2 |
|---|---|---|---|---|
| Surface BET m²/g | 260 | 85 | 300 | 270 |
| VPT cm³/g | 0,75 | 0,70 | 1,00 | 1,00 |
| $V$ cm³/g pour | | | | |
| Ø en nm < 10 | 0,25 | 0,05 | 0,70 | 0,25 |
| 10 - 100 | 0,25 | 0,47 | 0,20 | 0,80 |
| 100 - 1000 | 0,12 | 0,08 | 0,10 | 0,01 |
| > 1000 | 0,13 | 0,10 | 0,01 | 0,00 |
| Résistance à l'eau | oui | oui | non | non |
| Ø extérieur en mm | 2 à 7 | 2 à 7 | 2 à 5 | 1,5/3 |

Il apparaît clairement à l'examen de ce tableau que seules les billes de l'invention ont la macroporosité désirée et que d'autre part, seules celles-ci ont une résistance à l'eau adéquate qui leur permet de ne pas être endommagées par trempage dans l'eau ou lors de leur imprégnation par des solutions contenant des éléments catalytiquement actifs.

**Revendications**

1. Procédé de fabrication de particules de silice sphéroïdales par mise en forme au moyen d'un appareil de granulation d'un hydrosol de silice et xérogel ou un aérogel de silice caractérisé en ce qu'on agglomère au moyen de l'appareil de granulation un hydrosol de silice dont la teneur en silice est comprise entre 15 et 35 % en poids avec un xérogel ou un aérogel de silice dont les particules présentent un diamètre moyen compris entre 5 et 25 µm, le rapport entre la quantité de silice de l'hydrosol exprimée en $SiO_2$ et la quantité de silice du xérogel ou de l'aérogel exprimée en $SiO_2$ étant comprise entre 15 et 35 %, la particule sphéroïdale de silice obtenue est ensuite séchée.

2. Procédé selon la revendication 1 caractérisé en ce que cette teneur est comprise entre 18 et 30 %.

3. Procédé selon la revendication 1 caractérisé en ce que la surface spécifique de l'hydrosol mesurée après séchage à 200°C par la méthode B. E. T. est comprise entre 150 et 500 m²/g.

4. Procédé selon la revendication 3 caractérisé en ce que cette surface spécifique est comprise entre 300 et 450 m²/g.

5. Procédé selon la revendication 1 caractérisé en ce que le xérogel ou l'aérogel de silice mis en oeuvre est constitué de particules présentant un diamètre moyen compris entre 5 et 25 µm.

6. Procédé selon la revendication 5 caractérisé en ce que le diamètre moyen est compris entre 10 et 20 µm.

7. Procédé selon la revendication 1 caractérisé en ce que le séchage est opéré de préférence à une température comprise entre 200 et 800°C et plus particulièrement entre 400 et 500°C.

8. Particules sphéroïdales de silice susceptibles d'être obtenues selon le procédé des revendications 1 à 7, caractérisé en ce qu'elles présentent une répartition des volumes poreux suivant la taille des pores est la suivante:

| Ø en nm | < 10 | 10 - 100 | 100 - 1000 | > 1000 |
|---|---|---|---|---|
| $V$ cm³/g | 0 - 0,60 | 0,05 - 0,50 | 0,05 - 0,20 | 0,05 - 0,20 |

Ø représentant le diamètre des pores et $V$ le volume des pores ayant un diamètre compris dans les limites indiquées.

**Patentansprüche**

1. Verfahren zur Herstellung von kugeligen Kieselsäureteilchen, in dem ein Hydrosol und ein Xerogel oder ein Aerogel von Kieselsäure in einer Granuliervorrichtung geformt werden, dadurch gekennzeichnet, daß man in einer Granuliervorrichtung ein Hydrosol von Kieselsäure granuliert, dessen Kieselsäuregehalt 15 bis 35 Gew.-% beträgt, zusammen mit einem Xerogel oder Aerogel von Kieselsäure, dessen Teilchen einen mittleren Durchmesser von 5 bis 25 µm aufweisen, und das Verhältnis der Kieselsäuremenge des Hydrosols - ausgedrückt als $SiO_2$ - zu der Kieselsäuremenge des Xerogels oder Aerogels - ausgedrückt als $SiO_2$ - zwischen 15 und 35 % liegt, worauf die erhaltenen kugeligen Kieselsäureteilchen getrocknet werden.

4

2. Verfahren nach Anspruch 1,
dadurch gekennzeichnet, daß der Kieselsäuregehalt 18 bis 30 % beträgt.
3. Verfahren nach Anspruch 1,
dadurch gekennzeichnet, daß die spezifische Oberfläche des Hydrosols - bestimmt nach einem Trocknen bei 200° C - 150 bis 500 m²/g BET beträgt.
4. Verfahren nach Anspruch 3, dadurch
gekennzeichnet, daß die spezifische Oberfläche 300 bis 450 m²/g beträgt.
5. Verfahren nach Anspruch 1,
dadurch gekennzeichnet, daß das verwendete Xerogel oder Aerogel der Kieselsäure aus Teilchen mit einem mittleren Durchmesser von 5 bis 25 μm besteht.
6. Verfahren nach Anspruch 5,
dadurch gekennzeichnet, daß der mittlere Durchmesser der Teilchen 10 bis 20 μm beträgt.
7. Verfahren nach Anspruch 1,
dadurch gekennzeichnet, daß das Trocknen vorzugsweise bei einer Temperatur von 200 bis 800° C, insbesondere von 400 bis 500° C vorgenommen wird.
8. Kugelige Kieselsäureteilchen, die nach dem Verfahren der Ansprüche 1 bis 7 hergestellt werden können,
dadurch gekennzeichnet, daß die Porenvolumenverteilung bei der folgenden Porengröße die angegebenen Werte aufweist:

| Ø in nm | < 10 | 10 - 100 | 100 - 1000 | > 1000 |
|---|---|---|---|---|
| V cm³/g | 0 - 0,60 | 0,05 - 0,50 | 0,05 - 0,20 | 0,05 - 0,20 |

wobei Ø den Porendurchmesser und V das Porenvolumen bei einem Durchmesser in den angegebenen Grenzen bedeutet.

**Claims**

1. Process for the manufacture of spheroidal silica particles by shaping by of a granulation apparatus a hydrosol of silica and a xerogel or an aerogel of silica characterised by agglomerating by means of the granulation apparatus a silica hydrosol, the silica content of which is between 15 and 35 % by weight with a silica xerogel or aerogel, the particles of which are of a mean diameter of between 5 and 25 μm, the ratio between the quantity of silica of the hydrosol expressed as $SiO_2$, and the quantity of silica of the xerogel or aerogel expressed as $SiO_2$ being between 15 and 35 %, and the spheroidal silica particle obtained is then dried.
2. Process according to claim 1 characterised in that said content is between 18 and 30%.
3. Process according to claim 1 characterised in that the specific surface area of the hydrosol as after drying at 200° C by the BET method is between 150 and 500 m²/g.
4. Process according to claim 3 characterised in that said specific surface area is between 300 and 450 m²/g.
5. Process according to claim 1 characterised in that the silica xerogel or aerogel used is constituted by particles of a diameter of between 5 and 25 μm.
6. Process according to claim 5 characterised in that the mean diameter is between 10 and 20 μm.
7. Process according to claim 1 characterised in that drying is carried out preferably at a temperature of between 200 and 800° C and more particularly between 400 and 500° C.
8. Spheroidal silica particles which can be obtained by the process according to claim 1 to 7 characterised in that they offer a distribution of pore volumes in conformity with the size of the pores as shown below:

| Ø in nm | < 10 | 10 - 100 | 100 - 1000 | > 1000 |
|---|---|---|---|---|
| V cm³/g | 0 - 0.60 | 0.05 - 0.50 | 0.05 - 0.20 | 0.05 - 0.20 |

wherein Ø represents the diameter of the pores and V represents the volume of the pores of a diameter within the indicated limits.